# EUROPÄISCHE PATENTANMELDUNG

(11) **EP 0 527 252 A1**
(43) Veröffentlichungstag der Anmeldung: **17.02.1993**
(21) Anmeldenummer: 91113480.7
(22) Anmeldetag: 12.08.1991
(51) Int. Cl.: A21B 1/50, A21B 3/07

(54) **Gestellwagen für Stikkenöfen**

(71) Anmelder: Huth, Heinz, Dipl.-Ing., D-65558 Burgschwalbach (DE)
(72) Erfinder: Huth, Heinz, Dipl.-Ing., D-65558 Burgschwalbach (DE)

(57) **Zusammenfassung**

Der neue Gestellwagen für das Backen von gleich dickem Backgut in Stikkenöfen ist dadurch gekennzeichnet, daß er ein Hubgestell mit Einschubprofilen für die auf das Backgut abzusenkenden Abdeckgitter aufweist. Das Hubgestell besitzt auf jeder Seite nur ein Vierkantführungsrohr, das oben und unten auf am Gestellwagen befestigten Standsäulen geführt ist. Die Einschubprofile sind durch mindestens eine Vertikalleiste versteifend verbunden.

Der Fußhebel zum Absenken des Hubgestells besitzt einen höheneinstellbaren Anschlag und eine wieder auflösbare Arretierung in Form einer Kippklinke.

## Beschreibung

Die Erfindung bezieht sich auf einen Gestellwagen für Stikkenöfen mit den im Oberbegriff von Anspruch 1 angegebenen Merkmalen.

Stikkenöfen dieser Art werden mit einem Gestellwagen beschickt, auf dem das Backgut auf Backblechen liegt. Der Gestellwagen enthält dazu seitliche Leisten, auf die die Backbleche aufgelegt werden.

Es gibt Gebäckformen und Bratlinge, die eine bestimmte Dicke nicht überschreiten und vorzugsweise auf beiden Seiten gebacken werden sollen, auch wenn sie beim Backvorgang aufgehen. Für diesen Sonderfall wurde bereits eine Ausführung eines Gestellwagens vorgeschlagen, die dadurch gekennzeichnet ist, daß der Gestellwagen eine der Zahl der Backbleche entsprechende Anzahl von Abdechgittern aufweist, die an einem Hubgestell für gemeinsame Vertikalverstellung und untere Arretierung zusammengefaßt sind (DE-GM 8906000). Für die Abdeckgitter sind am Hubgestell Einschubprofile vorgesehen. Das Hubgestell wird nach dem Einlegen der gefüllten Backbleche soweit abgesenkt, bis die vorgesehene Dicke des Backguts erreicht ist.

Der bekannte Gestellwagen hat gewisse Nachteile. So soll das Hubgestell insgesamt vier vertikale Führungsrohre an allen vier Ecken erhalten. Als Hubvorrichtung dienen zwei an seitlichen Traversen des Hubgestells ungeschützt aufgehängte Zugfedern. Der Fußhebel liegt an einer Seite und ist nur in groben Stufen arretierbar.

Die Aufgabe, das Hubgestell an dem Gestellwagen der oben angegebenen Art Konstruktiv zu verbessern, wird erfindungsgemäß dadurch gelöst, daß auf jeder Seite nur ein in Längsmitte angeordnetes Führungsrohr vorgesehen ist, daß die Führungsrohre auf oberen und unteren Standsäulen geführt sind, daß die an den Führungsrohren befestigten Einschubprofile einer Seite für die Abdeckgitter durch mindestens je eine Vertikalstange verbunden und dadurch versteift sind, und daß der Fußhebel gegen einen unteren feineinstellbaren Anschlag arretierbar niedergedrückt werden kann.

Diese neue Konstruktion ist wesentlich einfacher und robuster.

Die Federn, die das Hubgestell aus der Arbeitsstellung in die Ruhestellung anheben, können als Druckfedern ausgebildet und in den Führungsrohren untergebracht werden. Auf die Standsäulen werden je zwei im Abstand übereinander angeordnete Gleitstücke aufgesetzt, die die als Vierkantrohr ausgebildeten Führungsrohre verdrehsicher und spielarm führen.

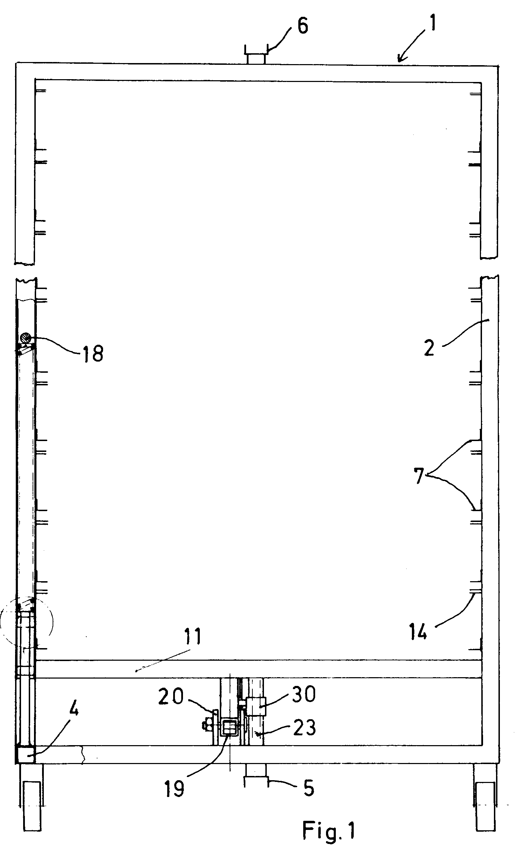

Der im Gestellwagen gelagerte Fußhebel ist mittig über einen Zweigelenk-Hebel mit der unteren Traverse des Hubgestells verbunden. Auf der vorderen Traverse des Gestellwagens steht neben dem Fußhebel ein rohrförmiger Ständer, auf dem der verstellbare untere Anschlag mittels einer eng übergepaßten Rohrstücks geführt ist. Die Einzelheiten der Feinverstellung und der selbsttätigen Rastung und Auflösung sind den nachfolgend beschriebenen Figuren zu entnehmen, die eine bevorzugte Ausführungsform der Erfindung zeigen, und zwar in
- Fig. 1: in (teilweise geschnittener) Vorderansicht
- Fig. 2: in Seitenansicht,
- Fig. 3: in einem Detail der Führung und Federung und
- Fig. 4: in einem Detail des Anschlages und der Arretierung des Fußhebels.

Der in einen Stikkenofen einfahrbare Gestellwagen 1 besteht aus einem vorderen und einem hinteren Rechteckrahmen 2,3 und an allen vier Ecken vorgesehenen Längsverbindern 4. Alle Teile bestehen aus Vierkantrohr. Oben und unten in der Mitte sind U- Schienen 5,6 angesetzt, die den Gestellwagen im Stikkenofen führen. Die vertikalen Profile der beiden Rahmen tragen die Auflageschienen 7 für die (nicht eingezeichneten) Backbleche.

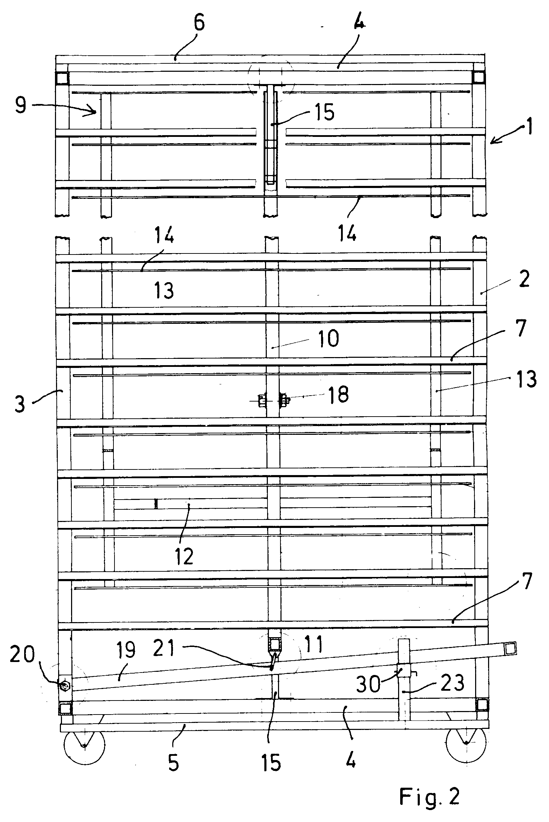

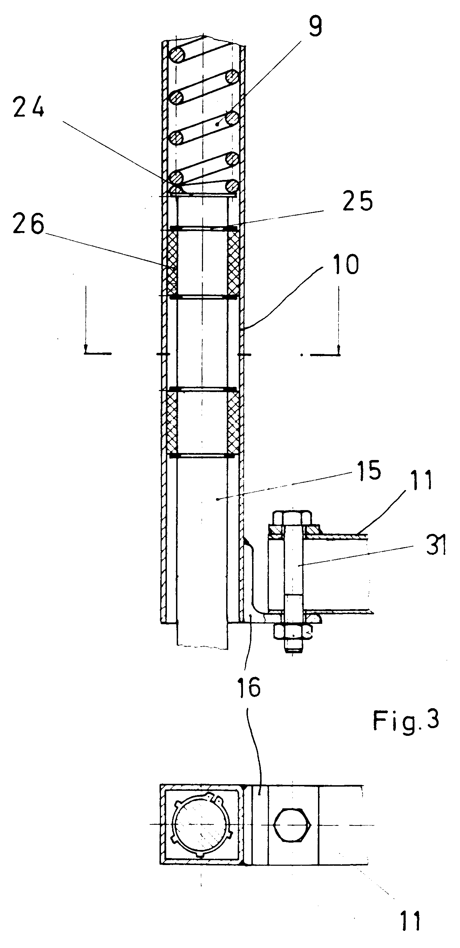

Wie insbesondere aus Fig. 2 zu erkennen ist, enthält das Hubgestell 9 nur zwei vertikale Führungsrohre 10, die oben und unten durch Traversen 11 miteinander verbunden sind. Von den Führungsrohren 10 geht im unteren Viertel je eine waagerechte Strebe 12 aus, die die Verbindung zu den vertikalen Profilen 13 herstellt, die ihrerseits die Einschubleisten 14 für die Abdeckgitter miteinander verbinden und versteifen. Geführt wird das Hubgestell 9 von oberen und unteren Standsäulen 15, die an den Längsverbindern 4 des Gestellwagens angeschraubt sind. Die Führungen sind in Fig.3 im Detail dargestellt.

Die Verbindung zwischen den Führungsrohren 10 und der unteren Traverse 11 wird durch einen mit Sechskantschrauben 31,32 verschraubten Winkel 16 hergestellt, der mit seinem vertikalen Schenkel an dem als Vierkantrohr ausgebildeten Führungsrohr 10 angeschweißt ist. Die Standsäulen 15 hingegen bestehen aus rundem Vollmaterial, in das im Abstand vier Nuten zum Einsetzen von Seegerringen 25 eingedreht sind. Diese Seegerringen halten Gleitstücke 26 aus Teflon oder einem ähnlichen gut selbstschmierenden Polyamid. Auf die Oberseite der unteren Standsäulen 15 stützt sich unter zwischenfügen einer Quadratscheibe 24 eine Druckfeder 17, deren oberes Ende durch eine das Führungsrohr 10 durchquerende Stiftschraube 18 abgefangen wird. Die Druckfedern drücken auf diese Weise das Hubgestell immer in die obere Freigabestellung.

Zum Absenken des Hubgestells 10 dient ein in der unteren Wagenmitte angeordneter Fußhebel 19, dessen rückwertiges Lager 20 über der hinteren unteren Rahmentaverse des Gestellwagens liegt.

Als Verbindung zum Hubgestell 9 dient ein kurzer Zwei- Gelenk-Hebel 21, der es somit ermöglicht, das Hubgestell bei Ausfall der Druckfedern auch aktiv anzuheben.

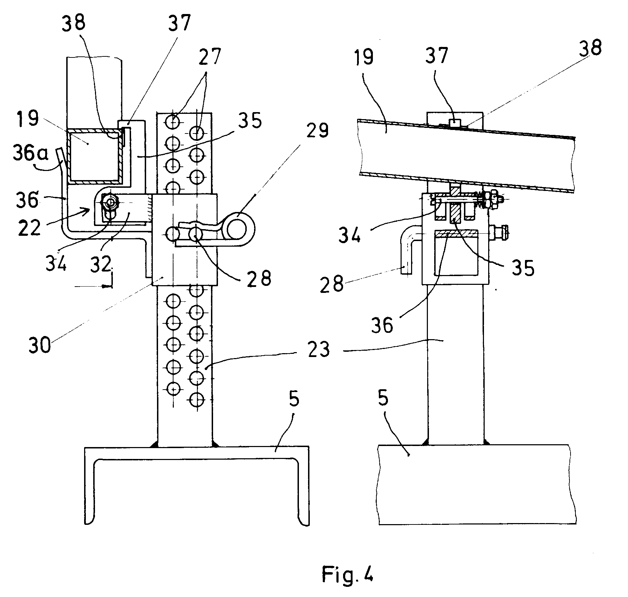

Die Einstellung des unteren Anschlags für den Fußhebel und seine Arretierung in dieser Stellung ist in Fig. 4 ins Detail dargestellt. Als Führung für den verstellbaren Anschlag 22 dient eine Vierkantsäule 23, die auf die untere U- Führungsschiene 5 des Gestellwagens 1 aufgeständert ist. Sie ist mit zwei Reihen auf Lücke gesetzter Bohrungen 27 versehen, in die der durch eine Bügelfeder 29 zu sichernde Stellbolzen 28 gesteckt werden kann.

Die auf der Vierkantsäule 23 geleitend verschiebbare Vierkantmuffe 30 besitzt zwei den beiden Lochreihen 27 entsprechende Bohrungen. Von der Vierkantmuffe 30 geht ein Lagerlaschenpaar 32 aus, in dem mittels eines federverspannten Bolzens 34 ein Anschlagwinkel 35 so gelagert ist, daß er sich mit seinem Knie durch Eigengewicht gegen den darunter befindlichen Winkel 36 legt. In dieser Stellung ist er aufnahmefähig für den Fußhebel 19. Durch Auflaufen des Fußhebels wird der Anschlagwinkel 35 aufgerichtet, so daß die Rastnase 37 seines vertikalen Schenkels über den Vorsprung 38 am Fußhebel greifen kann. Läßt man jetzt den Fußhebel los, dann zieht die Federkraft des Hubgestells den Winkel mit seinem Gelenkbolzen 34 in den Langlöchern bis zum Anschlag nach oben. Der Fußhebel ist jetzt arretiert. Der Fußhebel kann immer wieder in diese voreingestellte Arbeitsstellung abgesenkt werden.

Zum Lösen der Arretierung wird der Fußhebel nur kurz nach unten gedrückt. Der Anschlagwinkel kippt infolge seiner Schwerpunktlage nach rechts und bewirkt, daß die Rastnase den Vorsprung freigibt. Der Fußhebel wird dadurch freigegeben und wird mitsamt dem Hubgestell durch Federkraft nach oben gezogen.

Der Winkel befindet sich danach wieder in der Aufnahmestellung für den Fußhebel.

Zahlreiche Varianten dieser Ausführungsform sind denkbar. So können z.B. die Führungen umgekehrt werden, indem die Standsäulen als kurze Rohrstücke ausgebildet werden, in denen die Führungsstangen gleiten.

Für die Arretierung des Fußhebels gibt es mehrere Möglichkeiten. So kann statt des Kippwinkels eine senkrecht stehende Sägezahnstange vorgesehen sein, in die eine federnd belastete Raste am eingestellten Anschlag einrastet. Zum Lösen der Arretierung wird die Raste mit einem Zughaken ausgerüstet.

Schließlich kann der Fußhebel auch durch Reibkraft arretiert werden. Hierzu ist eine um einen unteren Gelenkpunkt schwenkbare Reibfläche vorgesehen, die durch eine obere Querzugfeder gegen eine starre Gegenfläche gezogen wird. Zum Auslösen wird die nahe dem Gelenkpunkt angebrachte waagerechte Pedalfläche betätigt.

## Patentansprüche

1. Gestellwagen (1) für Stikkenöfen mit mehreren etagenförmige übereinander angeordneten seitlichen Leisten (7) zum Auflegen von Backblechen und mit einem vertikal geführten Hubgestell (9), das eine der Zahl der Backbleche entsprechende Anzahl von Abdeckgittern aufweist, die von oben auf das Backgut abgesenkt werden können, dadurch gekennzeichnet, daß das Hubgestell (9) auf jeder Seite nur ein in oberen und unteren Standsäulen (15) geführtes Führungsrohr (10) aufweist, wobei die Führungsrohre (10) durch mindestens zwei horizontale Traversen (11) miteinander verbunden sind, daß die an den Führungsrohren (10) befestigten Einschubprofile (14) einer Seite für die Abdeckgitter durch mindestens je eine Vertikalstange (13) verbunden sind, und daß als Hubvorrichtung ein Fußhebel (19) vorgesehen ist, der arretierbar gegen einen unteren einstellbaren Anschlag (22) gedrückt werden kann.

2. Gestellwagen nach Anspruch 1, d.g., daß das Führungsrohr (10) aus Vierkantrohr besteht, in dem je Standsäule (15) zwei auf den Standsäulen im Abstand übereinander festgelegte Gleitstücke (26) gleiten.

3. Gestellwagen nach Anspruch 1 oder 2, d.g., daß das Hubgestell (9) durch in den Führungsrohren (10) angeordnete Druckfedern (17) angehoben wird, die sich auf den unteren Standsäulen (15) abstützen.

4. Gestellwagen nach Anspruch 1 bis 3, d.g., daß die Verbindung zwischen dem Fußhebel (19) und dem Hubgestell (9) ein Zweigelenk- Hebel (21) ist.

5. Gestellwagen nach Anspruch 1 bis 4, d.g., daß neben dem Fußhebel (19) ein rohrförmiger Ständer (23) steht, der den höhenverstellbaren unter Anschlag (22) und die Arretierung (35) in dieser unteren Betriebsstellung enthält.

6. Gestellwagen nach Anspruch 5, d.g., daß Ständer (23) und Anschlagführung (30) aus spielarm ineinander gleiten dem Vierkantrohr bestehen.

7. Gestellwagen nach Anspruch 5 oder 6, d.g., daß die Anschlagführung (30) einen Steckbolzen (28) und der Ständer (23) zwei Reihen auf Lücke versetzter Durchgangslöcher (27) aufweist.

8. Gestellwagen nach Anspruch 5 bis 7, d.g., daß die Arretierung als Kippwinkel (35) mit Übergewicht in die Lösestellung ausgebildet ist, wobei die Rastnase (37) in Arretierstellung über einen oberen Vorsprung (38) auf dem Fußhebel (19) greift.

9. Gestellwagen nach Anspruch 5 bis 8, d.g., daß der Fußhebel (19) durch eine kurz vor dem Einrasten wirksam werdende Führungslasche (36) mit Auflaufschräge (36a) am seitlichen Ausweichen gehindert wird.

10. Gestellwagen nach Anspruch 8, d.g., daß der horizontale Schenkel des Kippwinkels (35) der untere Anschlag für den Fußhebel (19) ist.

11. Gestellwagen nach Anspruch 1, d.g., daß die Standsäulen hohl ausgebildet und die Führungsrohre in den Säulen geführt sind.

12. Gestellwagen nach Anspruch 1, d.g., daß die Arretierung des Fußhebels als senkrecht stehende Sägezahnstange ausgebildet ist, in die eine am Fußhebel angebrachte Federklinke einrastet.

13. Gestellwagen nach Anspruch 12, d.g., daß zum Lösen der Raste die Sägezahnstange seitlich versetzbar ist.

14. Gestellwagen nach Anspruch 12, d.g., daß zum Lösen der Raste ein Zughaken vorgesehen ist.

15. Gestellwagen nach Anspruch 1, d.g., daß die Arretierung des Fußhebels eine durch Federkraft seitlich aufgedrückte Reibfläche ist, die durch Abheben der Reibfläche ausgelöst werden kann.

16. Gestellwagen nach Anspruch 15, d.g., daß die Reibfläche durch eine Fußplatte abgehoben werden kann.
